# EUROPÄISCHE PATENTSCHRIFT

(11) **EP 1 828 572 B1**
(45) Veröffentlichungstag und Bekanntmachung des Hinweises auf die Patenterteilung: **01.07.2015**
(21) Anmeldenummer: 05821705.0
(22) Anmeldetag: 12.12.2005
(51) Int. Cl.: F02C 7/228, F02C 6/00

(54) **VERFAHREN ZUM BETRIEB EINER GASTURBOGRUPPE**
METHOD FOR THE OPERATION OF A GAS TURBO GROUP
PROCEDE DE FONCTIONNEMENT D'UN ENSEMBLE TURBINE A GAZ

(30) Priorität: 23.12.2004 CH 214604
(43) Veröffentlichungstag der Anmeldung: 05.09.2007
(73) Patentinhaber: ALSTOM Technology Ltd, 5400 Baden (CH)
(72) Erfinder: BRAUTSCH, Andreas, CH-5303 Würenlingen (CH); ZAJADATZ, Martin, 79790 Küssaberg (DE)
(74) Vertreter: Alstom Technology Ltd
(86) Internationale Anmeldenummer: PCT/EP2005/056675
(87) Internationale Veröffentlichungsnummer: WO 2006/069906

(56) Entgegenhaltungen:
- DE-A1- 19 825 335
- US-A- 2 951 341
- US-A- 5 454 220
- US-A- 5 465 569
- US-A1- 2003 152 880
- US-B1- 6 202 399

## Beschreibung

### Technisches Gebiet

Die Erfindung betrifft ein Verfahren zum Betrieb einer Gasturbogruppe gemäss dem Oberbegriff des Anspruchs 1. Sie betrifft weiterhin ein zur Steuerung einer Gasturbogruppe gemäss einem erfindungsgemässen Verfahren konfiguriertes Steuermodul einer Kraftwerksanlage, sowie einen digitalen Code, durch welchen ein Steuermodul einer Kraftwerksanlage dazu konfiguriert und veranlasst wird, die Kraftwerksanlage gemäss einem erfindungsgemässen Verfahren zu betreiben.

### Stand der Technik

Der Betrieb einer Gasturbine mit gasförmigem Brennstoff erfordert einen mindestens Brenngasvordruck, der wenigstens so hoch sein muss, wie der Druck in der Brennkammer zuzüglich des Druckgefälles über das Brennstoffsystem. Das Druckgefälle ist dabei in hohem Ausmasse vom Brennstoffvolumenstrom, das heisst, bei ansonsten konstanten Bedingungen vom Brennstoffmassenstrom, abhängig. Brennkammern mit Vormischbrennern der Bauarten, wie sie unter Anderem aus EP 321 809, EP 780 629, WO 01/96785, WO 92/19913, WO 93/17279 bekannt geworden sind, benötigen ein vergleichsweise hohes Brenngasdruckgefälle, damit das Brenngas für die Vormischverbrennung mit einem hohen Impuls und fein verteilt durch die vergleichsweise kleinen Brennstoffaustrittsöffnungen austreten kann. Bei einer modernen Gasturbogruppe, welche beispielsweise in einer Hochdruckbrennkammer mit einem Brennkammerdruck von 30 bar arbeitet, werden für den Volllastbetrieb durchaus Brennstoffdrücke im Bereich von 40 bis 50 oder gar 60 bar und darüber benötigt. Der erforderliche Brenngasvordruck wird üblicherweise in der Projektierungsphase spezifiziert und muss entweder vom Gasverteilnetz garantiert werden, oder es sind teure und aufwändige Gasverdichterstationen notwendig, deren Betrieb weiterhin einen Teil der von der Gasturbogruppe erzeugten Leistung, beispielsweise eine Leistung im Bereich von 2 bis 5 MW, konsumiert. Wenn der notwendige Brenngasvordruck nicht bereitgestellt werden kann, so kann die Gasturbogruppe nach dem Stand der Technik nur mit verminderter Leistung betrieben werden. Daher werden die Gasverdichterstationen häufig sogar redundant ausgeführt, was einen hohen zusätzlichen Kapitalaufwand bedeutet.

### Darstellung der Erfindung

Gemäss einem beispielhaften Aspekt der Erfindung soll ein Verfahren der eingangs genannten Art so angegeben werden, dass die Nachteile des Standes der Technik vermieden werden. Gemäss einem spezifischen Aspekt der Erfindung soll das Verfahren insbesondere so angegeben werden, dass bei vermindertem Brenngasvordruck die Gasturbogruppe auch weiterhin mit einer möglichst hohen Leistungsabgabe betrieben werden kann, ohne eine zusätzliche Gasverdichterstation betreiben zu müssen.

Dies, neben einer Anzahl weiterer vorteilhafter Wirkungen, wird mit dem im Anspruch 1 angegebenen Verfahren erreicht.

Das vorgeschlagene Verfahren geht vom Arbeitsprozess einer Gasturbogruppe mit sequenzieller Verbrennung aus, wie sie beispielsweise aus EP 620 362 bekannt geworden ist; diese Druckschrift stellt hinsichtlich des diesbezüglichen Offenbarungsgehaltes einen integrierenden Bestandteil der vorliegenden Erfindung dar. Das hier vorgeschlagene Verfahren macht einerseits davon Gebrauch, dass in der zweiten Brennkammer ein geringerer Druck vorliegt als in der ersten Brennkammer. Daher muss der Brennstoff, der in der zweiten Brennkammer umgesetzt wird, gegen einen geringeren Gegendruck strömen, so, dass schon unter der Voraussetzung gleicher Druckverlustbeiwerte der Brennstoffverteilungssysteme zur Förderung eines bestimmten Brennstoffmassenstroms ein geringerer Brenngasvordruck oder Brenngasversorgungsdruck genügt. Hinzu kommt fallweise, dass die zweite Brennkammer, welche beispielsweise als selbstzündende Brennkammer in der Art ausgeführt ist, wie sie beispielsweise aus der EP 620 403 oder EP 669 500 bekannt ist, in beispielhaften Ausführungsformen der Erfindung mit Brennstofflanzen ausgerüstet ist, die geringere Druckverlustbeiwerte aufweisen als die oben genannten Vormischbrenner, welche in einer beispielhaften Ausführungsform der Erfindung in der ersten Brennkammer Anwendung finden. Das hier beschriebene Verfahren umfasst, einer Gasturbogruppe mit sequenzieller Verbrennung, wie sie zum Beispiel aus EP 620 362 bekannt ist, einen Summenmassenstrom eines Brennstoffs in einer gemeinsamen Versorgungsleitung mit einem Brennstoffversorgungsdruck zuzuführen, und diesen bei ausreichendem Brennstoffversorgungsdruck gemäss einem Normal-Betriebskonzept auf einen ersten Brennstoffmassenstrom für die erste Brennkammer oder Hochdruck-Brennkammer und einen zweiten Brennstoffmassenstrom für die zweite Brennkammer oder Niederdruck-Brennkammer aufzuteilen. Die Verwendung einer gemeinsamen Versorgungsleitung ist dabei bevorzugt nicht aber zwingend, es ist auch möglich, zwei individuelle Zuleitungssysteme für die beiden Brennkammern vorzusehen und den Brennstoff über diese jeweils mit einem gegebenenfalls individuell unterschiedlichen oder bevorzugt im wesentlichen gleichen Brennstoffversorgungsdruck zuzuführen. Der Summenmassenstrom ist in diesem Fall die einfache Summe der Massenströme in diesen beiden Zuleitungen und das Normal-Betriebskonzept besteht darin, die beiden Zuleitungssysteme derart anzusteuern, dass dieser Summenmassenstrom auf einen ersten Brennstoffmassenstrom für die erste Brennkammer oder Hochdruck-Brennkammer und einen zweiten Brennstoffmassenstrom für die zweite Brennkammer oder Niederdruck-Brennkammer gewissermassen nach dem Konzept aufgeteilt wird. Der Summenmassenstrom wird zum Beispiel bestimmt, indem die Gasturbogruppe auf eine bestimmte Nutzleistung eingeregelt wird, also derart, dass die Nutzleistungsabgabe der Gasturbogruppe einem Sollwert entspricht. Das Normal-Betriebkonzept umfasst beispielsweise, die Aufteilung des Summenmassenstroms auf die erste und zweite Brennkammer als Funktion der Nutzleistungsabgabe der Gasturbogruppe vorzugeben, wobei die Nutzleistungsabgabe als absolute oder als relative, auf eine Maximalleistung bezogene Grösse herangezogen wird; dem Fachmann ist dabei geläufig, dass die Maximalleistung einer luftatmenden Gasturbogruppe mit den Umgebungszuständen und insbesondere der Temperatur und dem Druck am Verdichtereinlass stark variiert. In einer anderen Ausführungsform des Verfahrens umfasst das Normal-Betriebskonzept, die Eintrittstemperatur des Heissgases beim Eintritt in die erste Turbine auf geeignete und an sich bekannte Weise zu ermitteln, und den ersten Brennstoffmassenstrom derart zu bemessen, dass die Eintrittstemperatur einen zulässigen oberen Grenzwert erreicht; der überschreitende Anteil des Summenmassenstroms wird dann der zweiten Brennkammer zugemessen. Diese beiden beispielhaften Ausführungsformen können sich ergänzend Verwendung finden, wobei bei geringen Leistungen die erste beispielhafte Art der Brennstoffaufteilung Anwendung findet, und die zweite als Temperaturbegrenzer für die Eintrittstemperatur der ersten Turbine bei hohen Leistungen Anwendung findet. Wenn der Brennstoffversorgungsdruck einen Grenzwert unterschreitet, wird von dem Normal-Betriebskonzept abgewichen. Gegenüber dem Normal-Betriebskonzept wird der erste Brennstoffmassenstrom um einen Differenzmassenstrom verringert und der zweite Brennstoffmassenstrom wird wenigstens um den Differenzmassenstrom erhöht. Im Fall von zwei individuellen Zuleitungssystemen für die beiden Brennkammern kann dabei vom Normal-Betriebskonzept abgewichen werden, wenn der Brennstoffversorgungsdruck in nur einem oder auch in beiden Zuleitungssystemen einen Grenzwert unterschreitet, im bevorzugten Fall einer gemeinsamen Versorgungsleitung für die erste und die zweite Brennkammer wird vom Normal-Betriebskonzept abgewichen, wenn der Brennstoffversorgungsdruck einen Grenzwert in dieser gemeinsamen Versorgungsleitung unterschreitet.

In einer beispielhaften Ausführungsform der Erfindung wird der Brennstoffversorgungsdruck unmittelbar gemessen, beispielsweise mittels eines Drucksensors. In weiteren Ausführungsformen der Erfindung wird der Brennstoffversorgungsdruck auf andere geeignete Weise bestimmt.

Der Druckgrenzwert kann fest vorgegeben werden, oder in Abhängigkeit vom Brennstoffmassenstrom vorgegeben und/oder dynamisch bestimmt werden, derart, dass der Grenzwert um so höher liegt, je grösser der Gesamtbrennstoffmassenstrom oder der Brennstoffmassenstrom der ersten Brennkammer ist. In einer anderen Weiterbildung des Verfahrens wird der Grenzwert des Brennstoffversorgungsdruckes, der eine Verschiebung der Brennstoffaufteilung auf die beiden Brennkammern und eine Abweichung vom Normal-Betriebskonzept auslöst, abhängig von der Nutzleistungsabgabe der Gasturbogruppe vorgegeben.

In einer beispielhaften Weiterbildung des erfindungsgemässen Verfahrens wird der Differenzmassenstrom, um den der Brennstoffmassenstrom der ersten Brennkammer verringert wird, in Abhängigkeit von der Differenz zwischen dem Druckgrenzwert und dem tatsächlichen Ist-Versorgungsdruck festgelegt, wobei der Differenzmassenstrom umso grösser ist, je kleiner der Ist-Versorgungsdruck ist.

Beim Einsatz von mager betriebenen Vormischbrennern in Gasturbinenbrennkammern ist es darüber hinaus bekannt, den Brennstoffmassenstrom gemäss einem beispielsweise lastabhängigen Verteilschema auf unterschiedliche Brenner und/oder Gruppen von Brennern aufzuteilen. Auf diese Weise wird insbesondere bei verringerten Brennstoffmassenströmen die Verbrennungsstabilität erhöht, indem selektiv einzelne Brenner und/oder Brennergruppen mit gegenüber der Gesamtstöchiometrie brennstoffreicherem Gemisch betrieben werden. Es kann sich fallweise als sehr zweckmässig erweisen, wenn bei der Veränderung des Brennstoffmassenstroms der ersten Brennkammer auch die interne Brennstoffverteilung der ersten Brennkammer auf unterschiedliche Brenner und/oder Gruppen von Brennern angepasst wird.

In einer Ausführungsform des hier vorgeschlagenen Verfahrens wird dann, wenn der Brennstoffversorgungsdruck einen Grenzwert unterschreitet, der Brennstoffmassenstrom der ersten Brennkammer um einen Differenzmassenstrom verringert, und der zweite Brennstoffmassenstrom zur zweiten Brennkammer wird wenigstens um den Differenzmassenstrom erhöht. Gemäss einer beispielhaften Ausführungsform des Verfahrens wird dabei der Gesamtbrennstoffmassenstrom konstant gehalten, derart, dass der Brennstoffmassenstrom zur zweiten Brennkammer genau um den Betrag erhöht wird, um den der Brennstoffmassenstrom der ersten Brennkammer vermindert wird. In einer anderen beispielhaften Weiterbildung des Verfahrens wird der Brennstoffmassenstrom der ersten Brennkammer um einen Differenzmassenstrom verringert, und die Erhöhung des Brennstoffmassenstroms der zweiten Brennkammer wird so geregelt, dass die Nutzleistung der Gasturbogruppe konstant bleibt. Im Allgemeinen liegt die Erhöhung des Brennstoffmassenstroms der zweiten Brennkammer dann etwas höher als die Verminderung des Brennstoffmassenstroms der ersten Brennkammer. Der gesamte Brennstoffmassenstrom steigt also für gleichbleibende Leistung an, jedoch wird der ebenfalls leistungskonsumierende Betrieb einer Gasverdichterstation vermieden, was diesen Effizienzverlust unter dem Strich aufwiegt. Die Nutzleistung wird beispielsweise als die Klemmenleistung eines von der Gasturbogruppe angetriebenen Generators gemessen.

Die im vorstehenden Absatz beschriebenen Ausführungsformen des hier beschriebenen Verfahrens finden insbesondere Anwendung, wenn die Nutzleistungsabgabe der Gasturbogruppe im Wesentlichen konstant ist, und der Brennstoffversorgungsdruck absinkt. Eine andere Ausführungsform der Erfindung kommt insbesondere dann zum Tragen, wenn die Gasturbogruppe mit einer bestimmten Nutzleistungsabgabe im Teillastbetrieb betrieben wird, wobei der Brennstoffversorgungsdruck ausreichend ist, um den hierfür erforderlichen Summenmassenstrom gemäss dem Normal-Betriebskonzept auf den ersten Brennstoffmassenstrom zur ersten Brennkammer und den zweiten Brennstoffmassenstrom zur zweiten Brennkammer aufzuteilen. Bei einer Erhöhung der Nutzleistung steigen auch der Summenmassenstrom und der erforderliche Brennstoffversorgungsdruck. Bei einem ausreichenden Brennstoffversorgungsdruck wird der Summenmassenstrom weiterhin gemäss dem Normal-Betriebskonzept auf die beiden Brennkammern aufgeteilt. Beim Unterschreiten des Grenzwertes des Brennstoffversorgungsdrucks wird der erste Brennstoffmassenstrom nicht weiter erhöht, und die zur Erhöhung der Nutzleistungsabgabe notwendige Erhöhung des Summenmassenstroms wird vollumfänglich dem zweiten Brennstoffmassenstrom zugeschlagen. Insbesondere dann, wenn der Druck in der ersten Brennkammer aufgrund der steigenden Leistung weiter ansteigt, wird es auch notwendig sein, bei weiterer Erhöhung der Nutzleistungsabgabe den ersten Brennstoffmassenstrom zu verringern, wodurch die Erhöhung des zweiten Brennstoffmassenstroms nochmals stärker ausfällt.

Beim Betrieb einer Kraftwerksanlage gemäss einem hier vorgeschlagenen Verfahren wird diese beispielsweise durch ein Steuermodul gesteuert. Die Erfindung umfasst daher auch ein Steuermodul einer Kraftwerksanlage, welches konfiguriert ist um eine Gasturbogruppe gemäss einem oben beschriebenen Verfahren zu betreiben. Das Steuermodul wird in einer beispielhaften Ausführungsform der Erfindung konfiguriert, indem ein digitaler Code in dem Steuermodul geladen und ausgeführt wird, welcher digitale Code das Steuermodul dazu veranlasst, eine Kraftwerksanlage gemäss einem oben beschriebenen Verfahren zu betreiben. Es werden zum Beispiel Eingangssignale, welche Aufschluss über den Betriebszustand und unterschiedliche Betriebsparameter der Gasturbogruppe geben, erfasst, verarbeitet und auf deren Grundlage Ausgangs- und Steuersignale gebildet. Die Generierung der Ausgangssignale aus Eingangssignalen erfolgt beispielsweise durch einen Prozessor, der von dem digitalen Code entsprechend programmiert ist. Diesbezüglich umfasst die Erfindung auch einen digitalen Code, welcher geeignet ist, das Steuermodul derart zu konfigurieren, dass es eine Gasturbogruppe zur Ausführung eines oben beschriebenen Verfahrens veranlasst. Weiterhin umfasst die Erfindung einen Datenträger, auf welchem der digitale Code und/oder der Quellcode des digitalen Codes gespeichert ist. Der Begriff Datenträger ist dabei im weitesten Sinne zu verstehen, derart, dass darunter beispielsweise magnetische und optische Speichermedien oder Speicherchips zu subsumieren sind. Der Begriff umfasst explizit auch nichtflüchtige Speicherbausteine sowie Logikbausteine oder Systeme von Logikbausteinen, insbesondere programmierbare Logikbausteine, welche dazu geeignet und programmiert sind, in einem Steuermodul eingebaut zu werden und dieses im oben genannten Sinne zu konfigurieren.

Weitere Ausgestaltungen und Weiterbildungen der Erfindung erschliessen sich dem Fachmann anhand des nachfolgenden Ausführungsbeispiels und der Unteransprüche.

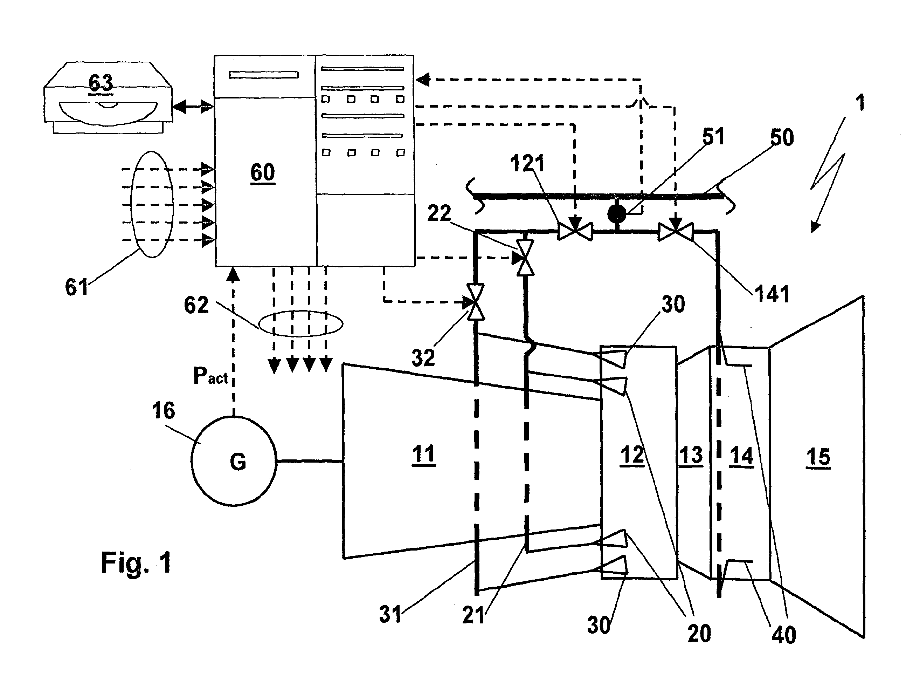

### Kurze Beschreibung der Zeichnung

Die Erfindung wird nachfolgend anhand eines in der Zeichnung dargestellten Ausführungsbeispiels näher erläutert. Die einzige Figur zeigt in einer schematischen Darstellung eine Gasturbogruppe mit sequenzieller Verbrennung, wie sie beispielsweise aus der EP 620 362 bekannt geworden ist, nebst einer schematischen Darstellung der Versorgung mit Brenngas und der Steuerung der Brenngasversorgung. Im Sinne einer besseren Übersichtlichkeit ist die Darstellung stark schematisiert; nicht zum Verständnis der Erfindung notwendige Einzelheiten sind weggelassen worden. Das Ausführungsbeispiel und die Zeichnung sollen dem besseren Verständnis der Erfindung dienen, und sollen nicht zur Einschränkung der in den Ansprüchen beschriebenen Erfindung herangezogen werden.

### Wege zur Ausführung der Erfindung

In der Figur ist eine Gasturbogruppe 1 schematisch dargestellt, wie sie beispielsweise aus der EP 620 362 bekannt geworden ist. Beim Betrieb dieser Gasturbogruppe wird ein Luftmassenstrom im Verdichter 11 verdichtet und in eine erste Brennkammer oder Hochdruckbrennkammer 12 eingeleitet. In der ersten Brennkammer wird ein erster Brennstoffmassenstrom dem verdichteten Luftmassenstrom zugeführt und verbrannt. Das entstehende Heissgas wird in einer ersten Turbine oder Hochdruckturbine 13 teilentspannt, wobei das Druckverhältnis in der ersten Turbine beispielsweise um 2 liegt. Das teilentspannte Heissgas tritt aus der ersten Turbine 13 mit noch hoher Temperatur und einem Restsauerstoffgehalt von üblicherweise mehr als 15 Prozent aus. Dieses teilentspannte Heissgas strömt in eine zweite Brennkammer oder Niederdruckbrennkammer 14 ein, wo dem Heissgas ein zweiter Brennstoffmassenstrom zugeführt wird. Aufgrund der noch hohen Temperatur des teilentspannten Heissgases entzündet sich der zweite Brennstoffmassenstrom spontan und erhitzt das teilentspannte Heissgas. Dieses nacherhitzte Heissgas wird in der Turbine 15, auch als Niederdruckturbine bezeichnet, weiter entspannt, beispielsweise in etwa bis auf Atmosphärendruck. Die bei der Entspannung der Heissgase in den Turbinen abgegebene Wellenleistung dient einerseits zum Antrieb des Verdichters; der verbleibende Teil der Wellenleistung wird als Nutzleistung zum Antrieb eines Generators 16 verwendet, der elektrische Nutzleistung an ein nicht dargestelltes Elektrizitätsnetz abgibt. Auf nicht dargestellte, dem Fachmann aber ohne weiteres geläufige Weise kann das Abwärmepotenzial des abströmenden Rauchgases beispielsweise zur Dampferzeugung genutzt werden. Die Zufuhr von Brennstoff zur ersten Brennkammer 12 erfolgt über Brenner 20, 30. Diese sind als Brenner der beispielsweise aus EP 321 809 bekannten Bauart angedeutet. In diesen Brennern wird eine verdrallte Strömung der Verbrennungsluft erzeugt, in welche über feine Brenngasöffnungen gasförmiger Brennstoff fein verteilt eingedüst wird. Aufgrund der fein verteilten Eindüsung des Brennstoffs liegt in diesen Brennern ein hoher Druckverlustbeiwert in der Brenngaszuführung vor. Das heisst, zur Eindüsung eines bestimmten Brennstoffmassenstroms wird ein vergleichsweise hohes Druckgefälle des Brenngases benötigt. Darüber hinaus liegt in der Brennkammer 12 der höchste Druck des gesamten Arbeitsprozesses vor, welcher beispielsweise bei rund 30 bar und auch darüber liegen kann. Damit ist ein sehr hoher Brenngasversorgungsdruck notwendig, wobei der notwendige Druck durchaus eine Grössenordnung von zum Beispiel 50 bis 60 bar, bezogen auf einen Brennkammerdruck von 30 bar, erreichen kann. Die fein verteilte Eindüsung des Brenngases in Verbindung mit einer intensiven Vormischung von Brennstoff und Brennluft ermöglicht die Realisierung einer mageren Verbrennung und sehr niedriger Stickoxidemissionen bei gleichzeitig gutem Ausbrand, benötigt aber, wie dargestellt, einen hohen Brenngasvordruck zum Durchsatz eines bestimmten Massenstroms. In der ersten Brennkammer 12 der beispielhaft dargestellten Gasturbogruppe 1 sind die Brenner, welche im Übrigen beispielsweise in einer ringförmigen Anordnung um die Achse der Maschine angeordnet sind, in zwei getrennt ansteuerbaren Gruppen von Brennern zusammengefasst. Die Brenner 20 einer ersten Gruppe sind an einer ersten ringförmigen Leitung 21 angeschlossen, welcher ein Brennstoffmassenstrom über ein Stellorgan 22 zugemessen wird. Die Brenner 30 einer zweiten Gruppe sind an einer zweiten ringförmigen Leitung 31 angeschlossen; die Zumessung des Brennstoffs erfolgt über ein Stellorgan 32. Gemäss einer an sich aus dem Stand der Technik bekannten Betriebsweise der ersten Brennkammer 12 wird eine Brennergruppe, beispielsweise die Brenner 20, mit so viel Brennstoff beaufschlagt, dass diese Brenner immer in einem stabilen, das heisst hinreichend brennstoffreichen Betriebsbereich arbeiten. Eine übersteigende Brennstoffmenge wird den Brennern 30 zugemessen. Aufgrund der Stützung durch die stabilen Brenner 20 der ersten Brennergruppe können die Brenner 30 auch mit sehr brennstoffarmem Gemisch betrieben werden, welches an sich noch keine stabile Verbrennung gewährleisten würde. Auf der anderen Seite wird durch die Zumessung von Brennstoff zu den Brennern 30 eine übermässige Anreicherung des Brennstoff-Luft-Gemisches der Brenner 20 vermieden, welche zu erhöhten Stickoxidemissionen und potenziell zu einer schädlichen Überhitzung der Brenner führen würde. Auf diese Weise erfolgt eine Aufteilung dieses Brennstoffmassenstroms auf die beiden Brennergruppen, welche wenigstens näherungsweise vom Brennstoffmassenstrom der ersten Brennkammer 12 abhängig ist; in der Praxis erfolgt diese Aufteilung häufig als Funktion der Nutzleistung oder einer relativen Leistung, zur deren Bildung die aktuelle Leistung auf eine Volllastleistung der Gasturbogruppe bezogen wird. Dabei besteht selbstverständlich keine Beschränkung auf zwei Brennergruppen; in der Praxis sind auch Anordnungen mit mehr als zwei Brennergruppen bekannt, oder die Schaltung von Einzelbrennern. Es sind ebenfalls Anordnungen bekannt, bei denen leistungsabhängig Einzelbrenner zuund abgeschaltet werden, und eine Brennergruppe kontinuierlich geregelt wird. Es ist an dieser Stelle aber nicht notwendig, derartige Brennerschaltungen und -betriebskonzepte im Detail und abschliessend zu diskutieren, weil dies nicht primär erfindungswesentlich ist. Die zweite Brennkammer 14, welche im Unterschied zur auch als Hochdruckbrennkammer bezeichneten ersten Brennkammer 12 als Niederdruckbrennkammer bezeichnet wird, ist in einer beispielhaften Ausführungsform als selbstzündende Brennkammer ausgeführt, in einer Bauart, die beispielsweise aus der EP 669 500 bekannt ist. In einer solchen Brennkammer strömt das sauerstoffhaltige Heissgas mit einer hohen Temperatur über nicht dargestellte, aus dem zitierten Stand der Technik aber an sich bekannte wirbelerzeugende Elemente. Stromab der wirbelerzeugenden Elemente sind Brennstofflanzen 40 angeordnet, welche einen zweiten Brennstoffmassenstrom in die Heissgasströmung eindüsen. Auf nicht dargestellte Weise befindet sich in einem Strömungskanal stromab der Lanzen 40 ein Querschnittsprung, an dem sich eine Flammenzone stabilisiert. Die Temperatur des Heissgases beim Eintritt in die zweite Brennkammer liegt typischerweise bei rund 850 °C und darüber, während die Temperatur des Heissgases beim Eintritt in die zweite Turbine oder Niederdruckturbine 15 in einem Bereich von rund 1200 bis 1300 °C liegt. Aufgrund der im Vergleich zur ersten Brennkammer deutlich niedrigeren Feuerungsleistung und der kurzen Verweilzeiten der Verbrennungsprodukte in dieser Hochgeschwindigkeitsbrennkammer sowie der an sich schon guten Vermischung des Brennstoffs in der mit hoher Geschwindigkeit strömenden Heissgas-Wirbelströmung kann die Brennstoffeinbringung in der zweiten Brennkammer mit einem deutlich geringeren Druckgefälle erfolgen, beziehungsweise die Brennstofflanzen 40 können mit einem deutlich geringeren Druckverlustbeiwert für das Brenngas ausgeführt sein als die Brenner 20 und 30 der Hochdruckbrennkammer 12. Darüber hinaus liegt der Druck in der zweiten Brennkammer deutlich unterhalb des Druckes in der ersten Brennkammer; mit den oben beispielhaft angegebenen Zahlenwerten liegt hier noch ein Druck von rund 15 bar vor, das heisst, der Gegendruck, gegen den das Brenngas anströmen muss, liegt um 15 bar unter dem in der ersten Brennkammer. Damit sind die Anforderungen an den Brenngasvordruck zum Durchsatz des gleichen Brennstoffmassenstroms deutlich geringer als in der ersten Brennkammer. Diese Tatsache macht sich die Erfindung wie nachfolgend dargestellt zu Nutze. Das Brenngas wird über eine Hauptleitung 50 herangeführt, welche beispielsweise Teil eines übergeordneten Verteilnetzes ist. Die Gasturbogruppe ist über eine nur schematisch angedeutete Übergabestation 51 an der Hauptleitung 50 angeschlossen. Der Gesamtbrennstoffmassenstrom wird über Stellorgane 121 und 141 auf die zwei Brennkammern der Gasturbogruppe aufgeteilt. Diese Aufteilung erfolgt anhand eines vorgegebenen Schemas, welches an anderen Orten beschrieben ist, beispielsweise leistungsabhängig. Die gesamte Steuerung und Regelung der Gasturbogruppe wird von dem Steuermodul 60 übernommen. Das Steuermodul 60 erhält Eingabewerte 61, welche beispielsweise Informationen über den Betriebszustand der Gasturbogruppe umfassen. Zu diesen Eingabewerten gehört beispielsweise auch die aktuelle Nutzleistung P_{act}. Als Funktion dieser Eingabewerte werden Ausgabewerte 62 gebildet, welche als Steuersignale an die Stellorgane der Gasturbogruppe weitergeleitet werden. Hierzu gehören auch die Steuerbefehle für die Brennstoffmassenstrom-Stellorgane 22, 32, 121, und 141. Als Steuermodul kommt beispielsweise eine digitale Recheneinheit zum Einsatz, welche durch ein auf einem Datenträger 63 gespeichertes Computerprogramm programmiert und somit zur Steuerung und Regelung der Gasturbogruppe konfiguriert ist. In dem dargestellten Beispiel wird an der Übergabestation 51 ein Brenngas-Versorgungsdruck gemessen und ebenfalls im Steuermodul 60 ausgewertet. Üblicherweise wird bei der Projektierung einer Kraftwerksanlage ein Brenngasvordruck spezifiziert, welcher vom Verteilnetz bereitgestellt werden muss. Es ist bekannt, in Fällen, in denen dieser Druck nicht unter allen Umständen garantiert werden kann, eine Gasverdichterstationen anzuordnen, welche das Brenngas aus der Hauptleitung 50 auf den notwendigen Vordruck verdichtet. Wenn der Brenngas-Versorgungsdruck einen Wert unterschreitet, der noch ausreichend ist, um einen bestimmten Brennstoffmassenstrom zur ersten Brennkammer 12 zu leiten, wird nach dem Stand der Technik eine Gasverdichterstation in Betrieb genommen, welche den erforderlichen Brenngasvordruck herstellt. Deren Betrieb verbraucht allerdings eine erhebliche Leistung. Darüber hinaus ist die Installation und Vorhaltung einer Gasverdichterstation der erforderlichen Grösse sehr kapitalintensiv. Gemäss der Erfindung kann nunmehr auf die Installation und den Betrieb einer Gasverdichterstation verzichtet werden. Wenn das Steuermodul 60 ein Absinken des Brenngasversorgungsdruckes unter einen Mindestwert registriert, wird das Stellorgan 121 um einen Betrag geschlossen und somit der Brennstoffteilmassenstrom, der zur ersten Brennkammer 12 geleitet wird, um einen Differenzmassenstrom vermindert. Gleichzeitig wird das Stellorgan 141 so weit geöffnet, dass wenigstens der Differenzmassenstrom zusätzlich zur zweiten Brennkammer 14 geleitet wird. Das heisst, ein Teil des Gesamtbrennstoffmassenstroms der Gasturbogruppe wird von der Hochdruckbrennkammer 12 in die Niederdruckbrennkammer 14 umgeschichtet, wo einerseits ein geringerer Gegendruck vorliegt, und andererseits in einer beispielhaften Ausführungsform der Erfindung zum Durchsatz eines bestimmten Massenstroms ein geringeres Druckgefälle vorliegen muss. In einer Ausführungsform der Erfindung wird in der ersten Brennkammer 12 die Aufteilung des Brennstoffs auf die Brenner 20 der ersten Gruppe und die Brenner 30 der zweiten Gruppe an den geringeren Brennstoffmassenstrom angepasst. Damit wird die Stabilität der Verbrennung in der ersten Brennkammer gewährleistet. Die Verbrennung eines bestimmten Brennstoffmassenstroms in der zweiten Brennkammer 14 resultiert im Allgemeinen in einer gering verminderten Nutzleistung gegenüber der Umsetzung in der Hochdruckbrennkammer 12. In einer Ausführungsform der Erfindung wird das Stellorgan 141 so weit geöffnet, dass die Nutzleistung des Generators aufrechterhalten wird, also gegenüber dem ursprünglichen Betriebszustand ein höherer Gesamtbrennstoffmassenstrom verfeuert wird. Das heisst, gegenüber dem ursprünglichen Betriebszustand der Gasturbogruppe sinkt zwar vorderhand der Wirkungsgrad; da jedoch keine Leistung für den Betrieb der Gasverdichterstation verbraucht wird, wird dieser Effizienzverlust gegenüber dem Stand der Technik wenigstens relativiert oder ganz ausgeglichen, wenn nicht überkompensiert.

Weitere Ausgestaltungen und Weiterbildungen der Erfindung eröffnen sich dem Fachmann anhand dieser Ausführungen vollkommen zwanglos.

### Bezugszeichenliste

- 1: Gasturbogruppe
- 11: Verdichter
- 12: erste Brennkammer, Hochdruckbrennkammer
- 13: erste Turbine, Hochdruckturbine
- 14: zweite Brennkammer, Niederdruckbrennkammer
- 15: zweite Turbine, Niederdruckturbine
- 16: Generator
- 20: Brenner
- 21: Ringleitung
- 22: Stellorgan
- 30: Brenner
- 31: Ringleitung
- 32: Stellorgan
- 40: Brennstofflanze
- 50: Brenngashauptleitung
- 51: Übergabestation
- 60: Steuermodul
- 61: Eingabesignale
- 62: Ausgabesignale, Stellsignale
- 63: Datenträger
- 121: Stellorgan
- 141: Stellorgan
- P_{act}: Nutzleistung der Gasturbogruppe

## Patentansprüche

1. Verfahren zum Betrieb einer Gasturbogruppe (1), umfassend, einen Luftmassenstrom in einem Verdichter (11) zu verdichten, den verdichteten Luftmassenstrom in eine erste Brennkammer (12) einzuleiten, einen ersten Brennstoffmassenstrom in der ersten Brennkammer in dem verdichteten Luftmassenstrom zu verbrennen, das entstehende Heissgas in einer ersten Turbine (13) zu entspannen, das teilentspannte Heissgas in eine zweite Brennkammer (14) einzuleiten, und einen zweiten Brennstoffmassenstrom in der zweiten Brennkammer in dem teilentspannten Heissgas zu verbrennen, welches Verfahren weiterhin umfasst, der Gasturbogruppe den ersten Brennstoffmassenstrom und den zweiten Brennstoffmassenstrom mit einem Brennstoffversorgungsdruck zuzuführen und die Aufteilung eines Summenmassenstroms in den ersten und den zweiten Brennstoffmassenstrom gemäss einem Normal-Betriebskonzept vorzugeben, **gekennzeichnet dadurch**, beim Unterschreiten eines Grenzwertes wenigstens eines der Brennstoffversorgungsdrücke von der Aufteilung gemäss dem Normal-Betriebkonzept abzuweichen, und gegenüber dem Normal-Betriebskonzept den ersten Brennstoffmassenstrom um einen Differenzmassenstrom zu verringern und den zweiten Brennstoffmassenstrom wenigstens um den Differenzmassenstrom zu erhöhen.

2. Verfahren nach Anspruch 1, **dadurch gekennzeichnet, dass** das Verfahren weiterhin umfasst, der Gasturbogruppe den ersten Brennstoffmassenstrom und den zweiten Brennstoffmassenstrom in einer gemeinsamen Versorgungsleitung (50) mit einem Brennstoffversorgungsdruck zuzuführen, beim Unterschreiten eines Grenzwertes des Brennstoffversorgungsdrucks in der gemeinsamen Versorgungsleitung von der Aufteilung gemäss dem Normal-Betriebkonzept abzuweichen, und gegenüber dem Normal-Betriebskonzept den ersten Brennstoffmassenstrom um einen Differenzmassenstrom zu verringern und den zweiten Brennstoffmassenstrom wenigstens um den Differenzmassenstrom zu erhöhen.

3. Verfahren gemäss Anspruch 1 oder 2, wobei das Normal-Betriebskonzept umfasst, die Aufteilung des Summenmassenstroms als Funktion der Nutzleistungsabgabe (P_{act}) der Gasturbogruppe vorzugeben.

4. Verfahren gemäss einem der Ansprüche 1, 2 oder 3, umfassend, zur Aufteilung des Summenmassenstroms die Eintrittstemperatur des Heissgases beim Eintritt in die erste Turbine (13) zu bestimmen, der ersten Brennkammer (12) den ersten Brennstoffmassenstrom derart zuzumessen, dass die Eintrittstemperatur einen zulässigen oberen Grenzwert erreicht, und den überschreitenden Anteil des Summenmassenstroms der zweiten Brennkammer (14) als zweiten Brennstoffmassenstrom zuzumessen.

5. Verfahren gemäss einem der vorstehenden Ansprüche, **gekennzeichnet dadurch**, den Summenmassenstrom derart einzustellen, dass die Nutzleistungsabgabe der Gasturbogruppe einem Sollwert entspricht.

6. Verfahren gemäss einem der vorstehenden Ansprüche, umfassend, den Grenzwert des Brennstoffversorgungsdruckes abhängig von der Nutzleistungsabgabe der Gasturbogruppe festzulegen.

7. Verfahren gemäss einem der vorstehenden Ansprüche, **gekennzeichnet dadurch**, den Brennstoffversorgungsdruck unmittelbar zu messen.

8. Verfahren gemäss einem der vorstehenden Ansprüche, **gekennzeichnet dadurch**, den Differenzmassenstrom in Abhängigkeit von der Differenz zwischen dem Druckgrenzwert und dem Ist-Versorgungsdruck festzulegen, wobei der Differenzmassenstrom um so grösser ist, je kleiner der effektive Versorgungsdruck ist.

9. Verfahren gemäss einem der vorstehenden Ansprüche, **gekennzeichnet dadurch**, in Abhängigkeit von der Veränderung des ersten Brennstoffmassenstroms die interne Brennstoffverteilung der ersten Brennkammer anzupassen.

10. Verfahren gemäss einem der vorstehenden Ansprüche, **gekennzeichnet dadurch**, den Summenmassenstrom konstant zu halten, den ersten Brennstoffmassenstrom um den Differenzmassenstrom zu verringern, und den zweiten Brennstoffmassenstrom um den Differenzmassenstrom zu erhöhen.

11. Verfahren gemäss einem der Ansprüche 1 bis 9, **gekennzeichnet dadurch**, den ersten Brennstoffmassenstrom um den Differenzmassenstrom zu vermindern, den zweiten Brennstoffmassenstrom um den Differenzmassenstrom zu erhöhen, und darüber hinaus den zweiten Brennstoffmassenstrom um einen weiteren Massenstrom derart zu erhöhen, dass die Nutzleistungsabgabe der Gasturbogruppe konstantgehalten wird.

12. Verfahren gemäss einem der Ansprüche 1 bis 9, umfassend, die Nutzleistungsabgabe der Gasturbogruppe zu erhöhen, den Summenmassenstrom zu erhöhen, den Summenmassenstrom gemäss einem Normal-Betriebskonzept auf den ersten Brennstoffmassenstrom und den zweiten Brennstoffmassenstrom aufzuteilen, und beim Unterschreiten des Grenzwertes des Brennstoffversorgungsdrucks den ersten Brennstoffmassenstrom nicht weiter zu erhöhen und die zur Erhöhung der Nutzleistungsabgabe notwendige Erhöhung des Summenmassenstroms vollumfänglich dem zweiten Brennstoffmassenstrom zuzumessen.

13. Steuermodul (60) einer Kraftwerksanlage, welches zur Durchführung eines Verfahrens gemäss einem der vorstehenden Ansprüche konfiguriert ist.

14. Digitaler Code, welcher geeignet ist, in einem Steuermodul (60) einer Kraftwerksanlage ausgeführt zu werden und, wenn er im Steuermodul einer Kraftwerksanlage ausgeführt wird, das Steuermodul dazu zu veranlassen, die Kraftwerksanlage gemäss einem Verfahren nach einem der vorstehenden Ansprüche zu betreiben.

15. Datenträger (63), auf welchem ein digitaler Code gemäss Anspruch 14 und/oder dessen Quellcode gespeichert ist.

## Claims

1. Method for operating a gas turbogroup (1), comprising compressing an air mass flow in a compressor (11), introducing the compressed air mass flow into a first combustion chamber (12), burning a first fuel mass flow in the compressed air mass flow in the first combustion chamber, expanding the generated hot gas in a first turbine (13), introducing the partially expanded hot gas into a second combustion chamber (14), and burning a second fuel mass flow in the partially expanded hot gas in the second combustion chamber, which method also comprises feeding the first fuel mass flow and the second fuel mass flow to the gas turbogroup with a fuel supply pressure, and predefining the division of a composite mass flow into the first and second fuel mass flows according to a normal operating concept, **characterized in that** when a limiting value of at least one of the fuel supply pressures is undershot the division according to the normal operating concept is departed from and the first fuel mass flow is reduced by a differential mass flow compared to the normal operating concept, and the second fuel mass flow is increased at least by the differential mass flow.

2. Method according to Claim 1, **characterized in that** the method also comprises feeding the first fuel mass flow and the second fuel mass flow to the gas turbogroup in a common supply line (50) with a fuel supply pressure, departing from the division according to the normal operating concept when a limiting value of the fuel supply pressure in the common supply line is undershot, and reducing the first fuel mass flow by a differential mass flow compared to the normal operating concept, and increasing the second fuel mass flow at least by the differential mass flow.

3. Method according to Claim 1 or 2, wherein the normal operating concept comprises predefining the division of the composite mass flow as a function of the effective power output (P_{act}) of the gas turbogroup.

4. Method according to one of Claims 1, 2 or 3, comprising, in order to divide the composite mass flow, determining the inlet temperature of the hot gas on entry into the first turbine (13), metering the first fuel mass flow to the first combustion chamber (12) in such a way that the inlet temperature reaches a permissible upper limiting value, and metering the excessive part of the composite mass flow of the second combustion chamber (14) as a second fuel mass flow.

5. Method according to one of the preceding claims, **characterized in that** the composite mass flow is set in such a way that the effective power output of the gas turbogroup corresponds to a setpoint value.

6. Method according to one of the preceding claims, comprising defining the limiting value of the fuel supply pressure as a function of the effective power output of the gas turbogroup.

7. Method according to one of the preceding claims, **characterized in that** the fuel supply pressure is measured directly.

8. Method according to one of the preceding claims, **characterized in that** the differential mass flow is defined as a function of the difference between the pressure limiting value and the actual supply pressure, wherein the differential mass flow is greater the lower the effective supply pressure.

9. Method according to one of the preceding claims, **characterized in that** the internal fuel distribution of the first combustion chamber is adapted as a function of the change in the first fuel mass flow.

10. Method according to one of the preceding claims, **characterized in that** the composite mass flow is kept constant, the first fuel mass flow is reduced by the differential mass flow, and the second fuel mass flow is increased by the differential mass flow.

11. Method according to one of Claims 1 to 9, **characterized in that** the first fuel mass flow is reduced by the differential mass flow, the second fuel mass flow is increased by the differential mass flow, and, in addition, the second fuel mass flow is increased by a further mass flow in such a way that the effective power output of the gas turbogroup is kept constant.

12. Method according to one of Claims 1 to 9, comprising increasing the effective power output of the gas turbogroup, increasing the composite mass flow, dividing the composite mass flow into the first fuel mass flow and the second fuel mass flow according to a normal operating concept, and not increasing the first fuel mass flow further when the limiting value of the fuel supply pressure is undershot, and metering completely to the second fuel mass flow the increase in the composite mass flow which is necessary to increase the effective power output.

13. Control module (60) of a power plant, which control module (60) is configured to carry out a method according to one of the preceding claims.

14. Digital code which is suitable to be executed in a control module (60) of a power plant, and suitable to cause the control module to operate the power plant in accordance with a method according to one of the preceding claims when said digital code is executed in the control module of a power plant.

15. Data carrier (63) on which a digital code according to Claim 14 and/or the source code thereof is stored.

## Revendications

1. Procédé de fonctionnement d'un ensemble turbine à gaz (1) comprenant le fait de comprimer un débit massique d'air dans un compresseur (11), d'introduire le débit massique d'air comprimé dans une première chambre de combustion (12), de brûler un premier débit massique de carburant dans la première chambre de combustion dans le débit massique d'air comprimé, de détendre le gaz chaud se formant dans une première turbine (13), d'introduire le gaz chaud partiellement détendu dans une deuxième chambre de combustion (14), et de brûler un deuxième débit massique de carburant dans la deuxième chambre de combustion dans le gaz chaud partiellement détendu, lequel procédé comprend en plus le fait d'amener à l'ensemble turbine à gaz le premier débit massique de carburant et le deuxième débit massique de carburant avec une pression d'alimentation de carburant et de spécifier à l'avance la répartition d'un débit massique total dans le premier et le deuxième débit massique de carburant conformément à un concept de fonctionnement normal, **caractérisé par** le fait de s'écarter de la répartition conformément au concept de fonctionnement normal lors du dépassement inférieur d'une valeur limite d'au moins une des pressions d'alimentation de carburant et de réduire le premier débit massique de carburant d'un débit massique différentiel par rapport au concept de fonctionnement normal et d'augmenter le deuxième débit massique de carburant d'au moins le débit massique différentiel.

2. Procédé selon la revendication 1, **caractérisé en ce que** le procédé comprend en plus le fait d'amener à l'ensemble turbine à gaz le premier débit massique de carburant et le deuxième débit massique de carburant dans un conduit d'alimentation commun (50) avec une pression d'alimentation de carburant, de s'écarter de la répartition conformément au concept de fonctionnement normal lors du dépassement inférieur d'une valeur limite de la pression d'alimentation de carburant dans le conduit d'alimentation commun et de réduire le premier débit massique de carburant d'un débit massique différentiel par rapport au concept de fonctionnement normal, et d'augmenter le deuxième débit massique de carburant d'au moins le débit massique différentiel.

3. Procédé selon la revendication 1 ou 2, pour lequel le concept de fonctionnement normal comprend le fait de spécifier à l'avance la répartition du débit massique total en fonction du rendement de puissance utile (P_{act}) de l'ensemble turbine à gaz.

4. Procédé selon l'une quelconque des revendications 1, 2 ou 3, comprenant la détermination de la température d'entrée du gaz chaud lors de l'entrée dans la première turbine (13) pour la répartition du débit massique total, l'attribution à la première chambre de combustion (12) du premier débit massique de carburant de telle sorte que la température d'entrée atteigne une valeur limite supérieure admissible et l'attribution de la part en excès du débit massique total à la deuxième chambre de combustion (14) en tant que deuxième débit massique de carburant.

5. Procédé selon l'une quelconque des revendications précédentes, **caractérisé par** le fait de régler le débit massique total de telle sorte que le rendement de puissance utile de l'ensemble turbine à gaz corresponde à une valeur théorique.

6. Procédé selon l'une quelconque des revendications précédentes, comprenant le fait de définir la valeur limite de la pression d'alimentation de carburant en fonction du rendement de puissance utile de l'ensemble turbine à gaz.

7. Procédé selon l'une quelconque des revendications précédentes, **caractérisé par** le fait de mesurer directement la pression d'alimentation de carburant.

8. Procédé selon l'une quelconque des revendications précédentes, **caractérisé par** le fait de définir le débit massique différentiel en fonction de la différence entre la valeur limite de pression et la pression d'alimentation effective, pour lequel plus la pression d'alimentation effective est faible, plus le débit massique différentiel est grand.

9. Procédé selon l'une quelconque des revendications précédentes, **caractérisé par** le fait d'adapter la répartition de carburant interne de la première chambre de combustion en fonction de la variation du premier débit massique de carburant.

10. Procédé selon l'une quelconque des revendications précédentes, **caractérisé par** le fait de maintenir constant le débit massique total, de réduire le premier débit massique de carburant du débit massique différentiel et d'augmenter le deuxième débit massique de carburant du débit massique différentiel.

11. Procédé selon l'une quelconque des revendications 1 à 9, **caractérisé par** le fait de diminuer le premier débit massique de carburant du débit massique différentiel, d'augmenter le deuxième débit massique de carburant du débit massique différentiel et d'augmenter en outre le deuxième débit massique de carburant d'un autre débit massique de telle sorte que le rendement de puissance utile de l'ensemble turbine à gaz soit maintenu constant.

12. Procédé selon l'une quelconque des revendications 1 à 9, comprenant le fait d'augmenter le rendement de puissance utile de l'ensemble turbine à gaz, d'augmenter le débit massique total, de répartir le débit massique total conformément à un concept de fonctionnement normal entre le premier débit massique de carburant et le deuxième débit massique de carburant et de ne pas augmenter encore le premier débit massique de carburant lors du dépassement inférieur de la valeur limite de la pression d'alimentation de carburant et d'attribuer l'augmentation du débit massique total nécessaire à la hausse du rendement de puissance utile dans sa totalité au deuxième débit massique de carburant.

13. Module de commande (60) d'une installation de centrale électrique qui est configuré pour exécuter un procédé selon l'une quelconque des revendications précédentes.

14. Code numérique qui est adapté pour être exécuté dans un module de commande (60) d'une installation de centrale électrique et, s'il est exécuté dans le module de commande d'une installation de centrale électrique, pour amener à cet effet le module de commande à faire fonctionner l'installation de centrale électrique conformément à un procédé selon l'une quelconque des revendications précédentes.

15. Support de données (63) sur lequel est mémorisé un code numérique selon la revendication 14 et/ou le code source de celui-ci.
